# EUROPEAN PATENT SPECIFICATION

(11) **EP 0 700 025 B1**
(45) Date of publication and mention of the grant of the patent: **22.05.2002**
(21) Application number: 95202366.1
(22) Date of filing: 02.09.1995
(51) Int. Cl.: G07F 11/10, G07F 5/18, B65G 1/04, G07G 1/00, B65G 1/137, G07F 7/00

(54) **Vending machine**
Verkaufsautomat
Machine de vente

(30) Priority: 02.09.1994 SE 9402917
(43) Date of publication of application: 06.03.1996
(73) Proprietor: Hörsted, Sören, 4572 NR Asmindrup (DK)
(72) Inventor: Hörsted, Sören, 4572 NR Asmindrup (DK)
(74) Representative: Arwidi, Bengt

(56) References cited:
- EP-A- 0 670 132
- DE-A- 2 514 442
- DE-A- 4 101 615
- US-A- 4 111 282
- PATENT ABSTRACTS OF JAPAN vol. 95, no. 1, 28 February 1995 & JP 06 282739 A (FUJI ELECTRIC), 7 October 1994

## Description

The present invention is for a device for selecting and distributing a ware from a storage to a certain point. The invention is primarily intended to be used in retail trading to transport goods from a place of storage to several checkout desks.In retail business there are many products, which are available in several brands and there are often several varieties of one brand.One such product is cigarettes, of which there can be tenths of different varieties at one retail place. In large shops having checkout desks cigarette packs are often kept in storage racks at each checkout desk and are picked by the desk operator as ordered by the customers. This brings with it drawbacks, both as costs for storage shelves etc. at each checkout desk, as increased storage quantities as there is to be one stock at each checkout desk and also as ergonomicly unsuitable operations of work, as it often is difficult to arrange shelves and boxes for these goods in the best way from an ergonomic point of view. Open, easily accesible shelves, where the customer himself picks his goods, increase the risks of theft and losses.

The present invention is for a device to select a piece of goods from a stock and convey it to a certain place. The stock of for example packs of cigarettes is centralized for several receiving points and selection, picking out and conveyance to the receiving point takes place according to instructions which are input to the system. These instructions may be given by an operator, for example a checkout desk operator, or by another person, for example a customer. One object of the invention is to eliminate ergonomicly unsuitable operations of work. Another object of the invention is to reduce the capital expenditure costs for keeping stock and the costs of handling and to reduce losses by theft and waste. One further object of the invention is to reduce the cost of installation for the required equipment. The device according to the invention is primarily intended to be used in retail business for goods which are prepacked in such a way that they are suited for conveyance by pneumatic systems. Therefor the goods should be packed in cardboard boxes or the like and, within certain limits, have a unitary shape and size. In order that transportation vertically upwards shall be possible the weight shall be low relative to the cross sectional area of the package.

One aspect of the invention is described in independent claim 1.

It is known in prior art to keep this kind of goods in devices from which they are automatically fed to a checkout desk. One such device, which is described in the Swedish patent no 8100754-4, comprises several compartments each having a push-out device and a chute into which selected goods is received and glides down to the checkout desk. Each checkout desk is equipped with its own such device. The European patent application published as no 37 989 describes a mechanical equipment for selecting and picking goods from storage compartments.

DE-A-4101615 describes an automated feed out device comprising storage means in which pieces of goods are stacked. The automated device includes push out means to push out a single piece from a stack. Also, US 4111282 describes a drive-in, single stop shopping facility for simultaneously vending of numerous retail products. The facility includes storage means for the products, purchase selection means operable by a customer when seated in a car. The customer's selections are communicated to an attendant and a cashier and the goods are delivered to the customer at the car by the attendant using suitable means therefor. Further, DE-A-2514442 describes a feeding equipment for goods, especially for ice-cream balls which are conveyed through a tube from a storage to a point of delivery by means of air flow.

The present invention is primarily intended to be used in retail business and will below be described by way of examples which refer to storage and transportation of packs of cigarettes. Also other applications are possible for example at plants for assembly of various products and spare part storage rooms.

The invention will below be described more in detail with reference to the embodiments which are shown in the enclosed figures.

Figure 1 shows a cross section of a device according to the invention at right angle to the direction of movement of the movable funnel.

Figure 2 shows a cross section through the device of figure 1 parallel with the direction of movement of the movable funnel.

Figures 3 and 4 show the same cross sections as in figure 1 of two more embodiments of the invention.

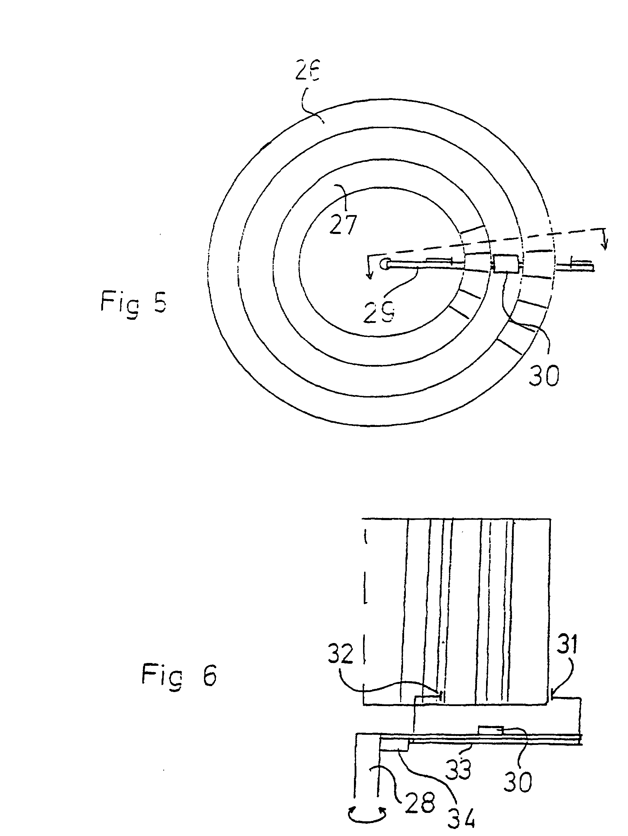

A preferred embodiment of the invention is shown in figures 5 and 6.

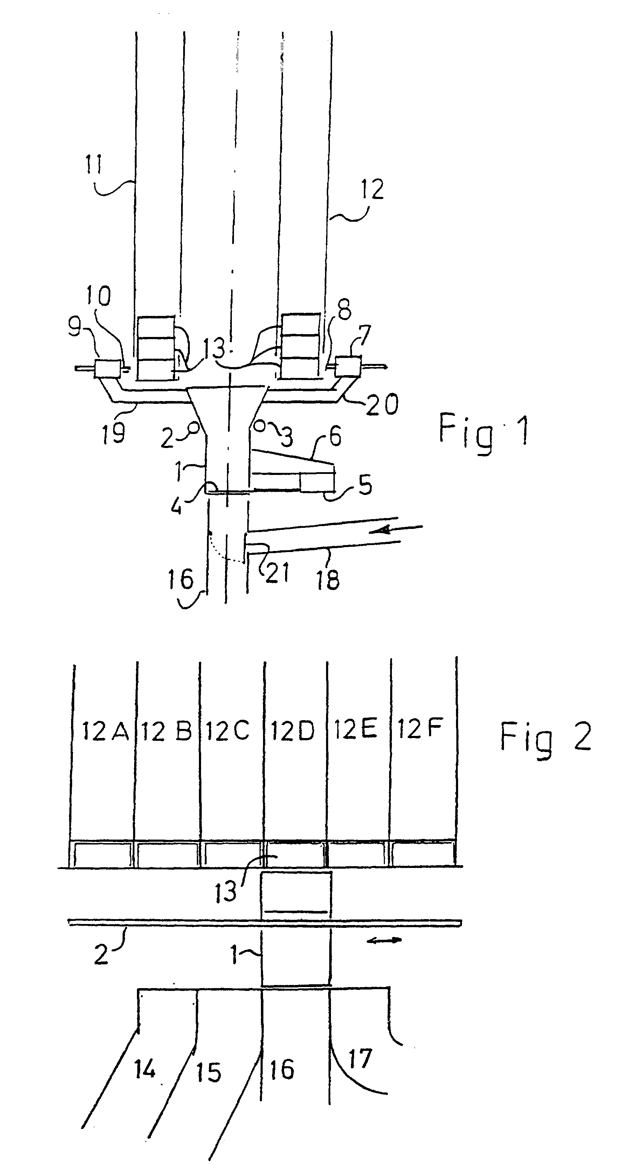

The products to be handled are stored as packages 13 in two rows of compartments 11 and 12. Each row has several compartments, and the example shown in figure 2 has six compartments a-f on both sides. Having its upper edge adjacent to the lower edge of the storage compartments there is a movable collector being a funnel 1, which is movably arranged on bearings such as guides, rails or the like 2, 3. Connected with the funnel there are tubes 14, 15, 16, 17 for the pneumatic conveyance of selected pieces of goods. Preferrably there is in immediate connection with the funnel a separate tube to each receiving position. It is also possible that several receiving positions are assigned a common first part of a tube which by means of a shift branches out to the separate receiving positions.

By means of consoles 19, 20 the funnel 1 carries push out devices 8, 10. In the example shown in figure 1 these comprise bars which are operated upon by electromagnets 7,9. At the lower opening of the funnel there is a cover 4, which can be opened and closed by means of a suitable driving device 5, e. g. a pneumatic cylinder. The driving device is mounted on to the funnel by a console 6.

In figure 1 there is also shown a conveyor tube 16. Connected thereto is a tube 18, from which air can be blown into the conveyor tube by a fan 22. A lid 21 is arranged to close and open against the tube 18 and the conveyor tube 16. The device shown in figures 1 and 2 is intended to function in the following way. In each separate compartment in the rows 11 and 12 there is a certain kind of product 13. The product wanted is selected for example by signals which are given from a keyboard which may be marked with figures, symbols or in any other suitable way. The signals are transmitted to a control system of the device which causes the funnel 1 to move to a position at the selected compartment. Thereupon the push-out devices 8, 10 are activated and push the selected product into the funnel. The product then drops down onto the the lid 4. Thereafter the funnel is moved to a position above the selected conveyor tube. Here the lid 4 is opened and the product falls into the conveyor tube 16. When the product has passed the lid 21 its position is changed so that the tube 18 is opened and the conveyor tube 16 is closed upwards. Air is blown into the tube 16 by the fan 22 and the piece of goods is conveyed to the receiving position. Hereby the lid 21 may be operated by suitable mechanical means or it may hang freely and be affected by the flow of air from the tube 18.

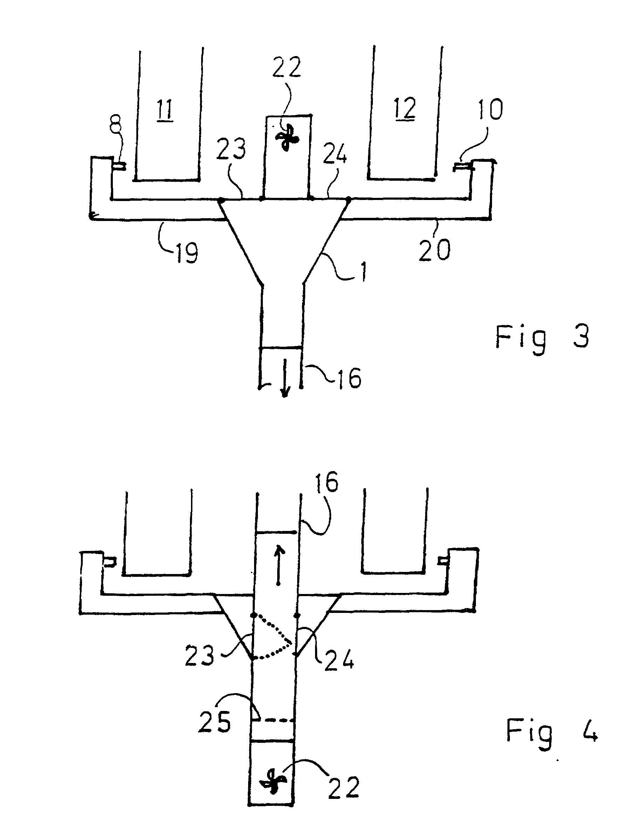

Another embodiment of the invention is shown in figure 3. Therein the funnel 1 has two openings which are closed by lids 23 and 24. The fan 22 is positioned centrally upon the the funnel between the lids. The devices for the operation of the lids do not form a part of the invention and are not shown in the figures. It is, however, possible to connect the lids to the push out devices in a suitable way, so that the lid is open only when a piece of goods shall be brought into the funnel.

A further embodiment of the invention is shown in figure 4. This is intended to make it possible to have the storage racks on the same level as the receiving position in a shop or other premise. The transportation from the storage should then take place upwards to a level close to the roof, thereupon horizontally at this level to the receiving position and down to it through a vertical tube section. Also in this example the funnel has two lids 23 and 24. The fan 22 is adjacent to the lower end of the funnel and above the fan there is a grid 25. A piece of goods which is transferred from a storage compartment to the funnel drops down on the grid 25 and when air is blown through the funnel by the fan 22 the goods is conveyed from the grid and upwards to the coveyor tube 16.Suitably the lids 23 and 24 are mounted vertically as shown in the figure and when a piece of goods is transferred to the conveyance system the lids are opened as shown by a broken line for lid 23.

A preferred embodiment of the invention is shown in figures 5 and 6. In this case the compartments containing the goods are positioned in two concentric circles 26, 27 where a shaft 28 is positioned in the centre. The shaft carries an arm 29 onto which is mounted a funnel or other device for collection of the selected piece of goods and tranportation thereof to the conveyor tube 16. The conveyor tube and thereto belonging arrangements are made in the same way as in the above described embodiments and are not shown in figures 5 and 6. The arm 29 also carries the push out devices 31 and 32 and the control devices 34 therefor. In this embodiment the device functions in the following way. When a piece of goods has been selected by a customer or desk operator a signal is sent to the control system of the device and a motor, onto which the shaft 28 may be directly mounted, turns the shaft 28 so that the collector 30 is positioned just at this goods. Thereupon the control device 34 of the push out devices is actuated so that if the selected piece of goods is in the inner row of compartments the push out devices are moved outwards from the centre and the pusher 32 pushes out the goods which drops into the collector 30. If the selected piece of goods is in the outer row of compartments the push out devices are moved inwards and the pusher 31 then works on the goods in a corresponding way. The pusher are in the embodiment shown in the figures connected to the control device by rods 33. In other embodiments the connection may be a system of links or two separate control devices, each of which directly or indirectly each works on one of the pushers. The goods drops into the collector whereafter the arm 29 is moved to a position where the goods is transferred to the conveyor tube.

The collector 30 and thereto associated devices for transfer of the goods to the conveyor tube may be made out in different ways. Above is descibed a collector in the form of a funnel and this may be used also when the compartments for the pieces of goods are arranged in circles. Other embodiments of the collector may take the shape of a bowl or plate and delivery of the goods may be done by tilting of the collector.

The above described embodiments are only intended to illustrate the invention and are in no way limiting. Several other embodiments are possible and for example it is by linear positioning of the storage compartments 11 and 12 not necessary that the funnel is movable along guides, as shown in figure 1, but it may also be carried by a lever arm or other device. Transportation in the tube system may also be by vacuum which is created inside the tubes. The fans shown in the drawings are then removed and substituted for by valves for controlled air inlet.

## Claims

1. Device for handling of goods (fig.1), whereby individual pieces of goods (13) are selected and conveyed from a central stock (12A-12F) to one out of several selection and receiving positions, comprising one or more pushers (8,10) to push out one piece of goods (13) from a selected compartment (11,12), comprising storage arrangement (12A-12F) having at least one compartment (11,12) for each kind of goods and devices for transfer of the piece of goods (13) to the conveying tube, a collector device (1) arranged movably along the compartments (11,12), tubes for conveying of the goods all the way to the receiving position by means of air flow inside the tube.

2. Device for handling of goods according to claim 1 **characterized in that** tubes (14,15,16,17) are arranged connectably to the collector for conveying of the goods by means of air flow inside the tube to the receiving position.

## Patentansprüche

1. Vorrichtung zur Handhabung von Waren (Fig. 1), wobei einzelne Waren (13) gewählt und von einem zentralen Vorrat (12A - 12F) aus an eine von mehreren Wahl- und Empfangspositionen befördert werden, umfassend eine oder mehrere Ausstossvorrichtungen (8, 10) zum Ausstossen einer Ware (13) aus einem gewählten Fach (11, 12), umfassend eine Vorratsanordnung (12A -12F), die mindestens ein Fach für jede Warenart hat, Anordnungen zur Beförderung der Ware (13).zu dem Beförderrohr, eine Sammelanordnung (1), die den Fächern (11, 12) entlang beweglich angeordnet ist, und Rohre um die Ware den ganzen Weg zur Empfangsposition mittels eines Luftstromes zu befördern.

2. Vorrichtung zur Handhabung oder zum Behandeln von Waren nach Patentanspruch 1, **dadurch gekennzeichnet, dass** Rohre (14, 15, 16, 17) anschliessbar an den Sammler angeordnet sind, um die Ware mittels eines Luftstromes innerhalb des Rohres zur Empfangsposition zu befördern.

## Revendications

1. Dispositif pour manipuler des marchandises (figure 1), moyennant quoi des marchandises individuelles (13) sont choisies et transportées depuis un entrepôt central (12A à 12F) vers une position parmi plusieurs positions de sélection et de réception, comprenant un ou plusieurs dispositifs poussoirs (8,10) pour pousser une marchandise (13) depuis un compartiment choisi (11, 12), comprenant un agencement d'entreposage (12A à 12P) ayant au moins un compartiment (11, 12) pour chaque type de marchandises et des dispositifs pour le transfert de la marchandise (13) vers le tube de transport, un dispositif collecteur (1) agencé de manière mobile le long des compartiments (11, 12) et des tubes pour transporter les marchandises tout le long jusqu'à la position de réception au moyen d'un flux d'air à l'intérieur du tube.

2. Dispositif pour manipuler des marchandises selon la revendication 1, **caractérisé en ce que** les tubes (14, 15, 16, 17) sont agencés de manière à pouvoir se connecter au collecteur afin de transporter les marchandises au moyen d'un flux d'air à l'intérieur du tube jusqu'à la position de réception.
